(19) **Europäisches Patentamt**
**European Patent Office**
**Office européen des brevets**

(11) **EP 3 938 759 B1**

(12) **EUROPEAN PATENT SPECIFICATION**

(45) Date of publication and mention
of the grant of the patent:
**20.09.2023 Bulletin 2023/38**

(21) Application number: **20711549.4**

(22) Date of filing: **11.03.2020**

(51) International Patent Classification (IPC):
**G01N 21/21** *(2006.01)*     **G01N 21/39** *(2006.01)*
**G01N 21/64** *(2006.01)*

(52) Cooperative Patent Classification (CPC):
**G01N 21/21;** G01N 21/6445; G01N 2021/216;
G01N 2021/391

(86) International application number:
**PCT/EP2020/056458**

(87) International publication number:
**WO 2020/182858 (17.09.2020 Gazette 2020/38)**

(54) **A METHOD FOR DETECTION OF AN ENANTIOMERIC EXCESS OF CHIRAL MOLECULES IN LIQUID PHASE AND A SENSITIVE DETECTOR OF THE CHIRALITY OF A MEDIUM**

EIN VERFAHREN ZUR MESSUNG EINES ENANTIOMERÜBERSCHUSSES AN CHIRALEN MOLEKÜLEN IN FLÜSSIGER PHASE UND EIN EMPFINDLICHER DETEKTOR DER CHIRALITÄT EINES MEDIUMS

UNE MÉTHODE DE DÉTECTION D'UN EXCÈS ÉNANTIOMÉRIQUE DE MOLÉCULES CHIRALES EN PHASE LIQUIDE ET UN DÉTECTEUR SENSIBLE DE LA CHIRALITÉ D'UN MILIEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2019 US 201962818505 P**

(43) Date of publication of application:
**19.01.2022 Bulletin 2022/03**

(73) Proprietor: **Albert-Ludwigs-Universität Freiburg**
**79098 Freiburg (DE)**

(72) Inventors:
• **BUHMANN, Stefan Yoshi**
**79098 Freiburg (DE)**
• **BENNETT, Robert**
**79098 Freiburg (DE)**

• **GORBACHEV, Yaroslav**
**79098 Freiburg (DE)**

(74) Representative: **Rösler, Uwe**
**Rösler Patentanwaltskanzlei**
**Landsberger Strasse 480a**
**81241 München (DE)**

(56) References cited:
**US-A1- 2015 323 445**

• **JAN KLAERS ET AL: "Bose-Einstein condensation of photons in an optical microcavity", NATURE, MACMILLAN JOURNALS LTD, LONDON, vol. 468, 25 November 2010 (2010-11-25), pages 545-548, XP002678442, ISSN: 0028-0836, DOI: 10.1038/NATURE09567 [retrieved on 2010-11-24] cited in the application**

**EP 3 938 759 B1**

**Description**

**Technical field**

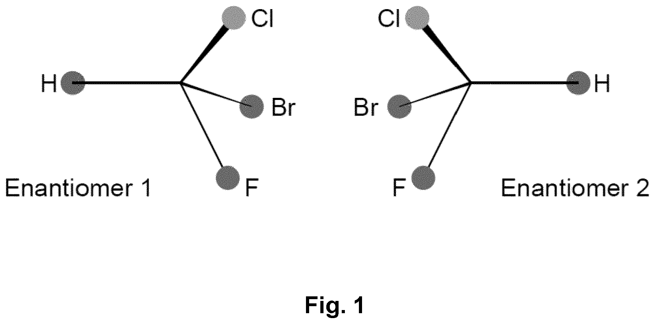

An object is said to be chiral if it cannot be brought into coincidence with its mirror image. Figure 1 shows the molecule bromochlorofluoromethane, which occurs in two types which differ by chirality, known as enantiomers of each other. Chirality plays a decisive role across physics, chemistry and biology, for example being crucial for encoding genetic information. Many of the receptors in the human body are chiral in nature, so that the chirality of a visiting molecule has a critical effect on recognition and reaction. At least half the drugs on the market are chiral, meaning that determination and control of chirality is the target of heavy investment, see M. H. M. Janssen and I. Powis, Detecting chirality in molecules by imaging photoelectron circular dichroism, Phys. Chem. Chem. Phys. 16, 856-871 (2014) and D. Patterson and M. Schnell, New studies on molecular chirality in the gas phase: enantiomer differentiation and determination of enantiomeric excess, Phys. Chem. Chem. Phys. 16, 11114 (2014).

While the chirality of a pure sample can be deduced relatively easily, a significant challenge is the investigation of solutions consisting of mixtures of two enantiomers, which is the prevalent situation in biological systems. Determination of the enantiomeric excess (essentially the relative concentration of the two enantiomers in the solution) has applications in amino-acid dating of living systems, see J. L. Bada, Amino acid racemization dating of fossil bones, Annu. Rev. Earth Planet. Sci. 13, 241-268 (1985). There a solution can be initially homochiral (consisting of one enantiomer only), and is gradually transformed to become racemic (enantiomers mixed in equal amounts) over the lifetime of the host.

**Description of the Prior Art**

The most advanced contemporary technique for determination enantiomeric excess in a mixture is via microwave three-wave mixing, see D. Patterson, M. Schnell, and J. M. Doyle, Enantiomer-specific detection of chiral molecules via microwave spectroscopy, Nature 497, 475-477 (2013) or D. Patterson and J. M. Doyle, Sensitive chiral analysis via microwave three-wave mixing, Phys. Rev. Lett. 111, 023008 (2013).

Some drawbacks of this technique include its reliance on the chiral molecules being in the gas phase and held at cryogenic temperatures.

Another approach for measurement of chirality based on optical investigation is described in US 2015/0323445 A1 which discloses a cavity enhanced polarimeter and a related method comprising the following steps: Promoting bi-directional propagation of a laser beam within an optical ring cavity of a polarimeter comprised of a plurality of reflective elements; introducing a first input laser beam and a second input laser beam into the ring cavity using a laser emitting device; and suppressing a birefringent background as the first and second laser beams pass through the ring cavity using a Faraday rotator and a phase compensator. The plurality of reflective elements, Faraday rotator, and phase compensator are configured such that light from the first and second laser beams passes through a chiral material located within the cavity a sufficient number of times and for a measurement of optical rotary dispersion and circular dichroism of light transmitted through the chiral material to be obtained.

**Summary of the invention**

It is an object of the invention to improve a method and a device for detection of an enantiomeric excess of chiral molecules in liquid phase such that less effort regarding technical and apparatus expenditure should be made and at the same time the measuring accuracy and measurement should be optimized.

The solution by means of which the object of the invention is achieved is specified in Claim 1, which describes a method for detection of an enantiomeric excess of chiral molecules in liquid phase for optical stimulation. The subject matter of independent claim 4 comprises a device for performing the method. Features that extend the idea of the invention in an advantageous way are the subject matter of the dependent claims and can be found in the remainder of the description with reference to the exemplary embodiments.

The method according to the solution for detection of an enantiomeric excess of chiral molecules in liquid phase comprising the following steps:
Directing laser light into a cavity filled with dye molecules dissolved in liquid, so called intra-cavity liquid, such that a Bose-Einstein condensate (BEC) of photons forms inside the cavity. Inserting of the chiral molecules into the intra-cavity liquid. Influencing the Bose-Einstein condensate (BEC) of photons with the chiral molecules. Measuring polarization of light emerging from the cavity and determining the enantiomeric excess of chiral molecules based on the measured polarization.

The inventive idea concerns the use of a Bose-Einstein condensate (BEC) of photons for detecting enantiomeric excess in the liquid phase at room temperature with a greater sensitivity than contemporary cryogenic methods.

The intensity of the laser light being directed into the cavity filled with the liquid with dye molecules will be adapted to particular absorption and emission properties of the dye molecules such that the lowest-energy standing wave, representing the Bose-Einstein condensate (BEC) of photons, becomes the only macroscopically excited mode between the two curved chiral mirrors of identical radius bordering said cavity. Under such conditions the laser light, which interacts with the dye molecules in the intra-cavity liquid, excites left- and right-circularly polarized standing waves inside the cavity. Depending on a majority of left- or right handed chiral molecules inserted in the intra-cavity liquid the light emerging from the cavity is left- or right circularly polarized only.

When inserting the chiral molecules into the intra-cavity liquid the polarization of the Bose-Einstein condensate (BEC) of photons will change from an unpolarised state to a circularly polarised state governed by the chirality of the molecules, which is determined by a polarimeter measuring the light emerged out of the cavity. Preferably the laser light directed into the cavity is of unpolarised light.

The device for performing the method according to the solution comprising, a laser source emitting laser light, a liquid-fillable cavity having two opposite sides consisting of partially reflecting curved chiral mirrors of identical radius and a polarimeter, wherein the laser light is directed to enter the dye-filled cavity through one of the mirrors, the mirrors are designed and arranged to form standing waves inside the cavity and the polarimeter is arranged outside the cavity to receive light emerging from the cavity through the other mirror.

The BEC of any type is one of the very few objects where quantum effects can become relevant at a macroscopic scale. A BEC is generated by subjecting a gas of bosonic particles to a set of conditions which allow a large fraction of them to occupy the quantum-mechanical ground state. First predicted by Bose and Einstein in the 1920s, its first realisation with bosonic atoms was achieved in 1995, see A. Einstein, Zur Quantentheorie des idealen Gases, Sitzungsberichte der Preußischen Akad. Der Wissenschaften 261 (1924) 10.1186/1471-2334-11-285. A more recent development is that a BEC can also be created from the massless boson that mediates the electromagnetic field of the photon. This was experimentally accomplished by researchers at the University of Bonn in 2010, see M. H. Anderson et al., Observation of Bose-Einstein Condensation in a Dilute Atomic Vapor, Science 269, 198-201 (1995). There, a dye-filled microcavity provides the conditions necessary for condensation to occur, with the lowest cavity standing-wave becoming macroscopically occupied once the power of a pumping laser exceeds some threshold value.

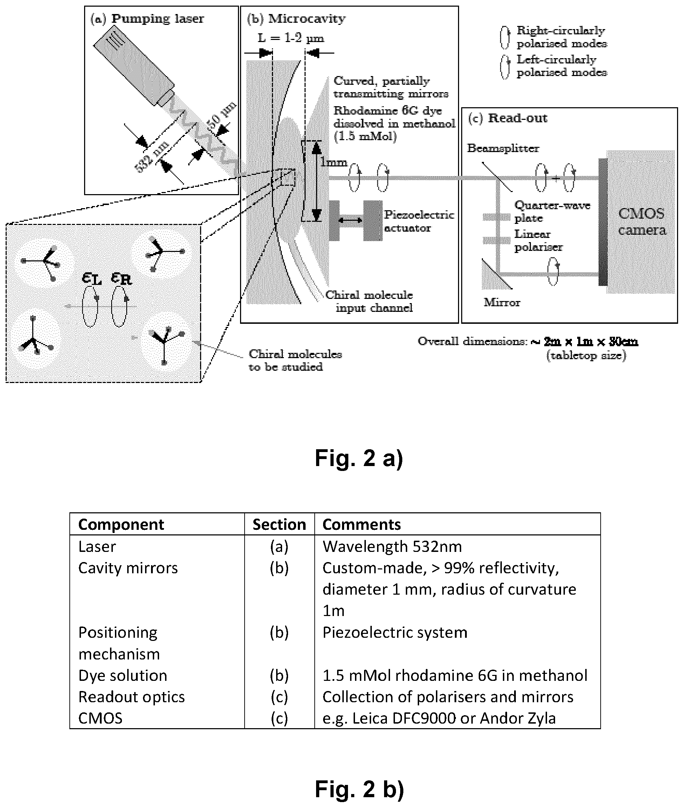

A preferred embodiment of the proposed device according to the solution is shown in Figure 2. The space between two gently curved mirrors is filled with methanol, into which rhodamine 6G dye is dissolved at a concentration of 1.5 mMol. The light of an external laser, preferably applied at an angle to exploit a reflectivity minimum of the mirrors excites circularly polarised standing waves inside the cavity. By setting the laser intensity above a given threshold, the dye molecules' particular absorption and emission properties cause only the lowest-energy mode to become exclusively excited. Upon inserting chiral molecules into the intracavity liquid, these induce to a small energy splitting between left- and right-circularly polarised waves, leading to a unique circular polarisation of the dominant standing wave. This polarisation of the emerging light is being detected behind the cavity by a polarimeter in the same way as done in J. Klaers et al., Bose-Einstein condensation of photons in an optical microcavity, Nature 468, 545-548 (2010). It is right- or left-handed, depending on the enantiomeric excess of the detected chiral molecules.

The device is intended to have at least two modes of operation. The first of these is where the presence of any chiral molecules in an otherwise achiral substance would be detected. The second mode would be where small deviations from an ideal racemic mixture would be detected in real time by continuously measuring the polarisation of the output light. This could be fed into a feedback mechanism where racemicity would be restored by addition of the appropriate enantiomer through the input channel.

There is a preferred operating procedure broken down as follows:

1. Determination of target scope, i.e. identification of chiral molecules to be detected, the associated range of enantiomeric excess and the frequency range at which these molecules have a chiral response,

2. Choice of detector components. i.e. given the target scope, a suitable combination of cavity regarding mirror reflectivity, mirror curvature and mirror distance, dye, regarding spectral response, and laser regarding frequency and intensity range, has to be identified.

3. Numerical simulation, i.e. given these choices, the detector response for a range of chiral target molecules must be simulated to predict the sensitivity of the device.

4. Device setup, i.e. the chosen components need to be assembled on an optical table, photonic Bose-Einstein condensation must be achieved in the absence of chiral target molecules.

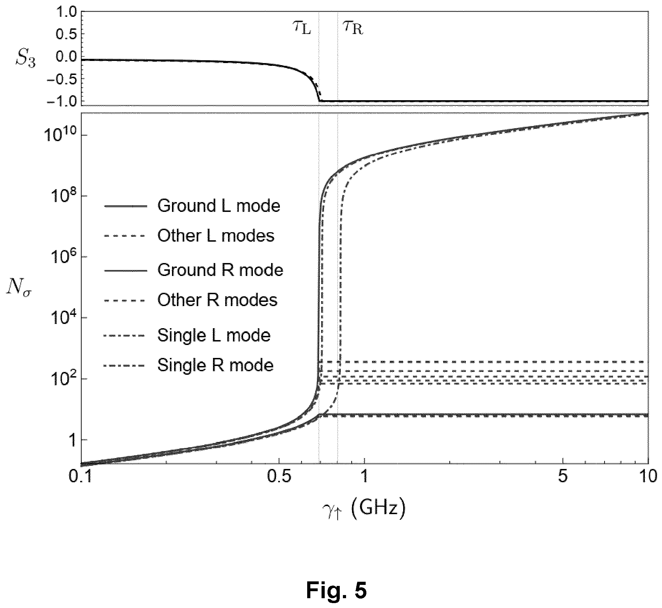

5. Device calibration, i.e. using mixtures of the left and right-handed chiral molecules of known concentration, the device response as will be shown in Figure 5 later have to compared with numerical simulations.

6. Device operation, i.e. having verified the correct operation of the device in agreement with predictions, the device can be used to detect unknown concentrations of the chiral molecules used for calibration or even enantiomeric excess of new, different chiral molecules.

The solution as described before has the following advantages over the state-of-the-art:

The device works at room temperature, avoiding the complicated and expensive process of cooling to cryogenic temperatures.

The device does not require the chiral molecules to be in the gas phase, rather having them immersed in a solvent

The device is extremely sensitive to even the smallest changes in directional refractive index due to the sharp nature of the BEC phase transition, meaning that it can outperform the best cryogenic methods of enantiomeric excess determination.

The device can detect changes in the enantiomeric excess of a solution in real time.

**Brief description of the drawings**

The invention will be described below in an exemplary manner by way of embodiments with reference to the figures, without any limitation of the general inventive concept. Here:

Fig. 1       shows the molecule bromochlorofluoromethane, which occurs in two types which differ by chirality, (prior art),

Fig. 2a      shows the device for detection of an enantiomeric excess of chiral molecules in liquid phase,

Fig. 2b      shows a table of preferred dimensions,

Fig. 3       shows a Emission and absorption spectrum. Every tenth mode (I = 0; 10; 20 ... ) is shown, while the lowest mode for each polarisation is shown as a thick line,

Fig. 4       shows a table with parameters used in the numerical simulations,

Fig. 5       shows a diagram of left and right mode occupation numbers as a function of pumping rate. Here the refractive indices are $n_l$ = 1.3405, $n_r$ = 1.3395.,

Fig. 6       shows a diagram of condensate polarisation $S_3$ as a function of refractive index difference and chiral parameter $\chi$ (multiplied by $10^5$) and enantiomeric excess $\epsilon$ and

Fig. 7       shows a three-dimensional diagram of the condensate polarisation $S_3$ as a function of refractive index difference and pumping strength, using the parameters shown in Table shown in Figure 4.

The method and the device according to the solution base on a mathematical model which will be described in the following:

Waves confined in a cavity filled with an optically-active medium of chiral susceptibility $\chi$ are subject to different refractive indices $n_\sigma = n \pm \chi$ ($\sigma$ = l, r) where $n$ is the refractive index of the intra-cavity medium (here a solution of rhodamine 6G and methanol) which is assumed to be non-magnetic ($\mu$ = 1). A cavity of chiral mirrors which reflect left-handed waves into left-handed ones and similarly for right-handed waves, supports standing waves of well-defined circular polarisation.

The cavity is assumed to be formed by two curved chiral mirrors of identical radius $R$. Denoting the mirror separation along the optical axis by $L_0$, the cavity length at a lateral distance r away from the optical axis is

$$L(r) = L_0 - 2\left(R - \sqrt{R^2 - r^2}\right)$$

. Separating the wave vector $k = \sqrt{k_z^2 + k_\parallel^2}$ into its normal and lateral components $k_z$ and $k_\parallel$, respectively, using the dispersion relation $E = hkc_\sigma$ ($c_\sigma = c/n_\sigma$: speed of light within the chiral medium with c denoting the vacuum speed of light) and noting that the normal component of a standing-wave mode has to fulfil the resonance condition $k_z = \pi j/L(r)$ (j = 1,2,...), the associated energy reads

$$E_{j\sigma}(r, k_\parallel) = \hbar c_\sigma \sqrt{\frac{j^2\pi^2}{L^2(r)} + k_\parallel^2} \approx \frac{\pi\hbar c_\sigma j}{L_0} + \frac{\hbar c_\sigma L_0 k_\parallel^2}{2\pi j} + \frac{\pi\hbar c_\sigma j r^2}{2L_0^2 R} \qquad (1)$$

in the paraxial approximation ($r \ll R$, $k_\parallel r \ll 1$). The lateral mode structure is hence that of a two-dimensional harmonic oscillator with an effective photon mass $m_{j\sigma} = \pi\hbar j/(c_\sigma L_0)$ and a lateral frequency $\omega_\sigma^\parallel = c_\sigma/\sqrt{L_0 R}$. The resulting mode energies

$$E_{jl\sigma} = \hbar\omega_{jl\sigma} = \hbar\omega_{j\sigma}^0 + l\hbar\omega_\sigma^\parallel \qquad (2)$$

($l = 0, 1,...$) are ($l + 1$)-fold degenerate for spherical mirrors where the off-set

$$\hbar\omega_{j\sigma}^0 = m_{j\sigma}c_\sigma^2 + \hbar\omega_\sigma^\parallel$$

is comprised of the transverse mode energy and the lateral zero-point contribution. In the following, we are going to use a multi-index $v = (j, l, \sigma)$ to denote the modes where appropriate.

To describe the dynamics of these modes for imperfectly reflecting mirrors, the cavity leakage or decay constants $\kappa$ are required. For two highly-reflecting mirrors (reflection coefficients $|r_\sigma| = 1 - \eta$ with $\eta \ll 1$) and in the paraxial approximation, the cavity resonances are of Lorentzian shape with widths $\kappa = 2\eta c_\sigma/L_0$.

Closely following the system Hammiltonian can be written in a generalised Jaynes-Cummings form, see P. Kirton and J. Keeling, Thermalization and breakdown of thermalization in photon condensates, Phys. Rev. A 91, 033826 (2015), as:

$$\hat{H} = \sum_v \hbar\omega_v \hat{a}_v^\dagger \hat{a}_v + \sum_\alpha \left(\tfrac{1}{2}\hbar\omega_D \hat{\sigma}_\alpha^z + \hbar\omega_V \hat{b}_\alpha^\dagger \hat{b}_\alpha\right) + \sum_{v\alpha} \hbar g_v(\hat{a}_v \hat{\sigma}_\alpha^\dagger \hat{D}_\alpha + \hat{a}_v^\dagger \hat{\sigma}_\alpha \hat{D}_\alpha^\dagger) \qquad (3)$$

where a polaron transformation $\hat{H} \mapsto \hat{U}^\dagger \hat{H} \hat{U}$ with

$$\hat{U} = \exp[\textstyle\sum_\alpha \sqrt{S}\hat{\sigma}_\alpha^z(\hat{b}_\alpha - \hat{b}_\alpha^\dagger)]$$

has been applied, and a displacement operator

$$\hat{D}_\alpha = \exp[2\sqrt{S}(\hat{b}_\alpha - \hat{b}_\alpha^\dagger)]$$

defined. The first term is the Hamiltonian of the intracavity field with mode creation and annihilation operators

$$\hat{a}_v^\dagger,$$

, $\hat{a}_v$. The second term is the free Hamiltonian for a dye molecule with a single electronic transition (frequency $\omega_D$, described by Pauli operators $\hat{\sigma}_\alpha$,

$$\hat{\sigma}_\alpha^\dagger,$$

$$\hat{\sigma}_\alpha^z$$

), and a ladder of rovibrational levels (frequency splitting $\omega_V$, described by creation and annihilation operators $\hat{b}_\alpha^\dagger$ and $\hat{b}_\alpha$). The final term describes the mutual interactions of photons with the electronic and rovibrational transitions through the coupling constants $g_v$ and S (the Huang-Rhys factor) respectively. We can then integrate out the rovibrational degrees of freedom together with those field modes which are only weakly coupled to the molecules to arrive at a master equation

$$\dot{\rho} = -\frac{i}{\hbar}[\hat{H}_0, \hat{\rho}] - \left( \sum_\nu \frac{\kappa}{2}\mathcal{L}[\hat{a}_\nu] + \sum_\alpha \left\{ \frac{\gamma_\uparrow}{2}\mathcal{L}[\hat{\sigma}_\alpha^\dagger] + \frac{\gamma_\downarrow}{2}\mathcal{L}[\hat{\sigma}_\alpha] \right\} + \sum_{\nu\alpha} \left\{ \frac{\gamma_{\downarrow\nu}}{2}\mathcal{L}[\hat{a}_\nu\hat{\sigma}_\alpha^\dagger] \right\} + \frac{\gamma_{\uparrow\nu}}{2}\mathcal{L}[\hat{a}_\nu^\dagger\hat{\sigma}_\alpha] \right) \hat{\rho} \quad (4)$$

where $\hat{H}_0$ describes the Hamiltonian dynamics of the electronic dye transition and the remaining cavity modes (which play no further role here). The Lindblad terms $\mathcal{L}[\hat{O}]\hat{\rho} = \{\hat{O}^\dagger\hat{O}, \hat{\rho}\} - 2\hat{O}\hat{\rho}\hat{O}^\dagger$ describe cavity leakage ($\kappa$ as derived above), pumping of the dye molecules by an external laser ($\gamma_\uparrow$), spontaneous decay into field modes that have been integrated out ($\gamma_\downarrow$) and stimulated emission ($\gamma_{\downarrow v}$) as well as absorption ($\gamma_{\uparrow v}$) from field modes included in the dynamics. The rates for the latter two processes read $\gamma_{\downarrow v} = 2 \, \mathrm{Re} \, K_v(\omega_D - \omega_v)$ and $\gamma_{\uparrow v} = 2 \, \mathrm{Re} \, K_v(\omega_v - \omega_D)$ with

$$K_\nu(\omega) = g_\nu^2 \int_0^\infty dt \, \langle \hat{D}_\alpha(t)\hat{D}_\alpha(0)\rangle e^{-(\gamma_\uparrow+\gamma_\downarrow)t/2}e^{-i\omega t}. \quad (5)$$

Note that the spatial variation of both the coupling constant $g_v$ and the rates $\gamma_\downarrow$, $\gamma_{\downarrow v}$ and $\gamma_{\uparrow v}$ have been neglected, so that these quantities are equal for all dye molecules. From these the coupled rate equations for the mean photon numbers $N_\nu = \langle \hat{a}_\nu^\dagger \hat{a}_\nu \rangle$ and the excited-state population of the molecules $p_e = \langle \hat{\sigma}_\alpha \hat{\sigma}_\alpha^\dagger \rangle$ in a semiclassical approximation can be deduced as

$$\dot{N}_\nu = -\kappa N_\nu - \gamma_{\uparrow\nu} N_\nu M(1-p_e) + \gamma_{\downarrow\nu}(N_\nu+1)Mp_e, \quad (6)$$

$$\dot{p}_e = -\Gamma_\downarrow p_e + \Gamma_\uparrow(1 - p_e) \quad (7)$$

with total rates

$$\Gamma_\downarrow = \gamma_\downarrow + \sum_\nu (l+1)(N_\nu+1)\gamma_{\downarrow\nu}, \qquad \Gamma_\uparrow = \gamma_\uparrow + \sum_\nu (l+1)N_\nu\gamma_{\uparrow\nu} \quad (8)$$

where $M$ is the number of dye molecules.
The main quantites of interest here are photon numbers in the stationary state of the driven-dissipative system. Eliminating the molecular degree of freedom in an adiabatic approximation these can be found as the stationary limit of

$$\dot{N}_\nu = -\kappa N_\nu + M \frac{\gamma_{\downarrow\nu}(N_\nu+1)\gamma_\uparrow - \gamma_{\uparrow\nu}N_\nu\gamma_\downarrow}{\gamma_\uparrow + \gamma_\downarrow}. \quad (9)$$

Before solving these equations numerically, it is worth discussing the analytical solution which exists in the single-mode case,

$$N_\nu = \frac{1}{2\kappa(\gamma_{\uparrow\nu} + \gamma_{\downarrow\nu})}\left(M(\gamma_\uparrow\gamma_{\downarrow\nu} - \gamma_\downarrow\gamma_{\uparrow\nu}) - \kappa(\gamma_\uparrow + \gamma_\downarrow + \gamma_{\downarrow\nu})\right.$$

$$\left. \pm \left\{\left[M(\gamma_\uparrow\gamma_{\downarrow\nu} - \gamma_\downarrow\gamma_{\uparrow\nu}) - \kappa(\gamma_\uparrow + \gamma_\downarrow + \gamma_{\downarrow\nu})\right]^2 + 4M\gamma_\uparrow\kappa\gamma_{\downarrow\nu}(\gamma_{\uparrow\nu} + \gamma_{\downarrow\nu})\right\}^{1/2}\right) \quad (10)$$

For a high-quality cavity with $\kappa \ll \gamma_\uparrow, \gamma_\downarrow, \gamma_{\uparrow\nu}, \gamma_{\downarrow\nu}$, this simplifies to

$$N_\nu = \begin{cases} 0 \text{ if } \gamma_\uparrow \leq \gamma_\downarrow\gamma_{\uparrow\nu}/\gamma_{\downarrow\nu}, \\ \dfrac{M(\gamma_\uparrow\gamma_{\downarrow\nu} - \gamma_\downarrow\gamma_{\uparrow\nu})}{\kappa(\gamma_{\uparrow\nu} + \gamma_{\downarrow\nu})} \text{ if } \gamma_\uparrow \geq \gamma_\downarrow\gamma_{\uparrow\nu}/\gamma_{\downarrow\nu}. \end{cases} \quad (11)$$

which demonstrates the sharp jump in occupation number at a threshold pump frequency given by $\gamma_\downarrow\gamma_{\uparrow\nu}/\gamma_{\downarrow\nu} \equiv \tau_\nu$. It also demonstrates that the main quantities determining the degree of condensation are those relating to the dye spectrum, rather than, for example, the cavity decay.

absorption $\gamma_{\uparrow\nu}$ are derived from the spectrum of rhodamine 6G, which is fitted to experimental data via the following functions:

$$\gamma_{\downarrow\nu} = \frac{\delta^2\gamma_{\downarrow\nu}^0}{\delta^2 + (\Omega_0 + l\omega_\sigma^\parallel - \Delta\Omega)^2}, \quad (1')$$

$$\gamma_{\uparrow\nu} = \frac{\delta^2\gamma_{\uparrow\nu}^0}{\delta^2 + (\Omega_0 + l\omega_\sigma^\parallel - \Delta\Omega)^2} \quad (2')$$

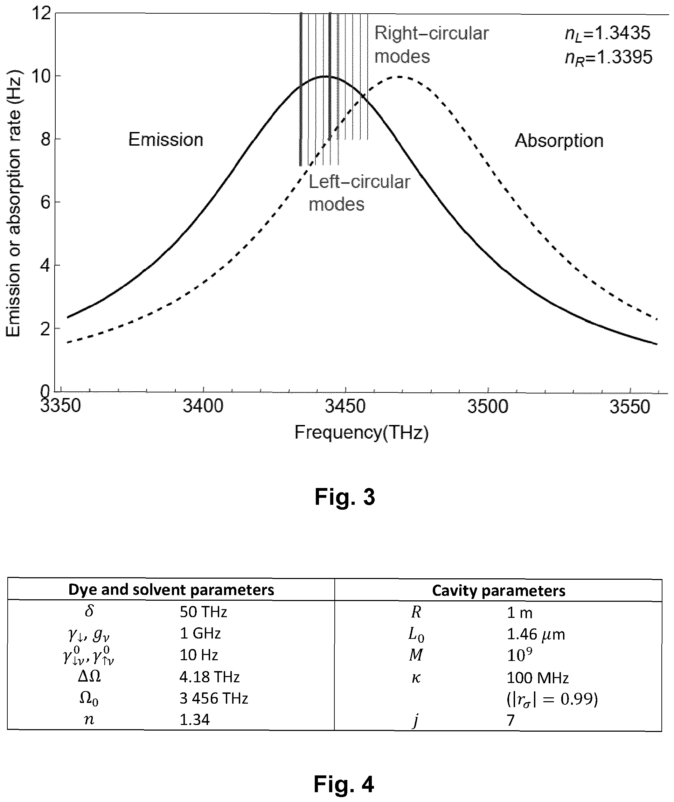

as shown in Figure 3, which was generated using the parameters listed in Table shown in Figure 4. Figure 3 shows an emission and absorption spectrum. Every tenth mode (l = 0; 10; 20 ... ) is shown, while the lowest mode for each polarisation is shown as a thick line. The Table shown in Figure 4 shows parameters used in the numerical simulations. The cavity parameters are taken directly from the experiment, the solvent and dye spectral parameters are fitted to measured data, and the remainder are taken from theoretical work describing the experiment.

The cavity modes appear as shown if the $j = 7$ manifold is selected. An example result of the numerical simulations are shown in Figure 4, where a sharp jump in occupation number for the left-polarised mode is observed as the threshold frequency is crossed. Crucially, this jump is not found in the right-polarised mode, meaning that the output signal of the cavity will have a clear 'left' polarization. This can be quantified by investigating the Stokes parameter:

$$S_3 = \frac{N_r - N_l}{N_r + N_l} \quad (3')$$

which is shown in the inset of Fig. 5, illustrating left and right mode occupation numbers as a function of pumping rate. Here the refractive indices are $n_l = 1.3405$, $n_r = 1.3395$. There the polarization rapidly jumps from $\sim -0.1$ (slightly left-circularly polarised), to -1 (strongly left-circularly polarised) as the threshold frequency is passed.

Having shown that the device can determine the excess chirality in a sample for one particular choice of refractive index, its sensitivity for real chiral molecules can now be evaluated. The value of $\chi$ in terms of the wavelength $\lambda$ of light incident on a sample of molecular number density $\rho$ is;

$$|\chi| = \frac{|\Theta|\alpha\rho m\lambda}{2\pi} \quad (4')$$

where $\alpha$ is the volume fraction of chiral molecules of mass $m$ in the whole solution, and $\Theta$ is the specific rotation given by

$$\Theta = \alpha(\alpha_r - \alpha_l)\theta \times 0.01 \, \text{m2/kg} \qquad (|\alpha_r - \alpha_l| = \epsilon) \qquad\qquad (5')$$

where $\theta$ is the tabulated value for a particular molecule (often referred to itself as the specific rotation), and $\alpha_\sigma$ are the volume fractions of each enantiomer within the chiral component of the solution ($\alpha_l + \alpha_r = 1$), so that the absolute value of their difference is the enantiomeric excess $\epsilon$. The angle $\theta$ parameterises how much a particular chiral molecule rotates an incoming beam of circularly polarised light, independent of the concentration and propagation length. The number density of the methanol which fills the cavity in the proposed device is $\rho = 1.488 \times 10^{28}$ m$^{-3}$, and its operating frequency of 3450 THz corresponds to a wavelength of 546 nm, giving;

$$|\chi| = 2.14 \times 10^{-8}\theta m_u \epsilon \alpha^2 \qquad\qquad (6')$$

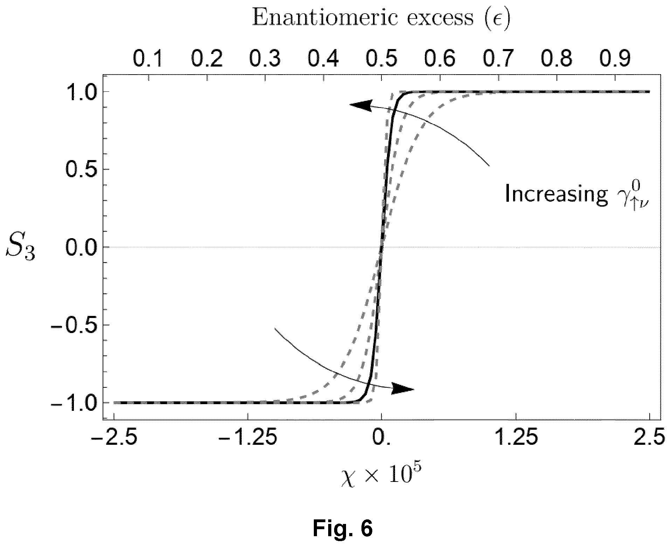

where $m_u$ is the mass of each chiral molecule in atomic mass units $u = 1.66 \times 10^{-27}$ kg. Considering a solute of glucose (mass 180u, $\theta = 44°$) with volume fraction $\alpha = 40\%$, one finds $\chi = 2.7 \times 10^{-5}\epsilon$. Figure 6 shows a condensate polarisation $S_3$ as a function of refractive index difference and chiral parameter $\chi$ (multiplied by $10^5$) and enantiomeric excess $\epsilon$.

The solid line corresponds to the parameters shown in Table 2, while the dotted lines have had $\gamma_{\uparrow\nu}^0$ scaled by factors 0.5, 2 and 10 in the order indicated. The enantiomeric excess is shown as a percentage on the upper axis of Fig 6, where $\chi$ is varied for a single pump frequency slightly above threshold. The gradient $dS_3/d\epsilon$ at $\epsilon = 0.5$ is approximately 30, showing that a state-of-the-art cryogenic enantiosensitivity of 0.02 can be detected as a shift of around 0.6 in the Stokes parameter $S_3$. The accuracy of the Stokes parameter measurements already carried out in the first (and so far only), relatively rough experiments was around $\pm 0.2$. Figure 6 also demonstrates how the sensitivity of the device and its operating window (i.e. the range and slope of the circular polarisation as a function of enantiomeric excess between the two plateau regions) can be modified by varying the dye-molecule response $\gamma_{\uparrow\nu}$ at the operating frequency of the laser-cavity system.

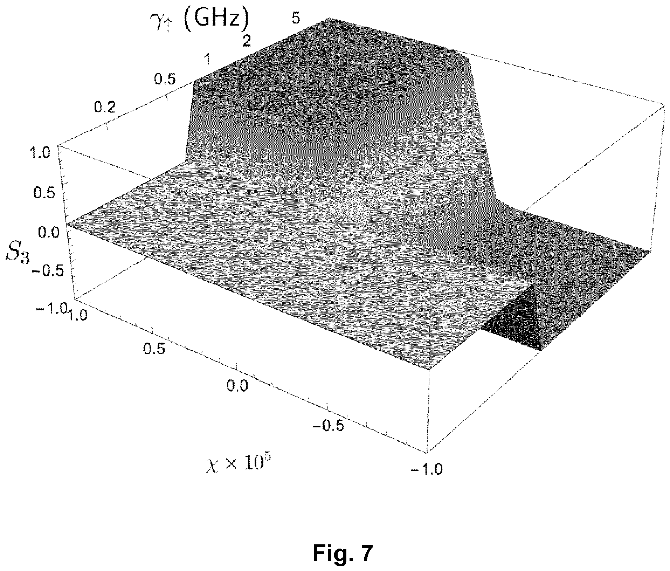

Finally, Figure 7 shows the condensate polarisation $S_3$ as a function of refractive index difference and pumping strength, using the parameters shown in Table shown in Figure 4. Figure 7 represents a summary of the ideas presented, where both the refractive index difference and the pumping strength are varied simultaneously. We note that any type of chiral molecule or structure which can be dissolved a solvent alongside rhodamine 6G could be investigated in this way. Taking methanol as an example solvent as above, these include for instance $\alpha$-methyl-2-naphthalenemethanol and phospholipid tubules.

**Claims**

1. Method for detection of an enantiomeric excess of chiral molecules in liquid phase comprising:

   directing laser light into a cavity filled with dye molecules dissolved in liquid, so called intra-cavity liquid, such that a Bose-Einstein condensate, BEC, of photons forms inside the cavity, by adaption of intensity of the laser light being directed into the cavity filled with the liquid with dye molecules to particular absorption and emission properties of the dye molecules such that the lowest-energy standing wave,
   representing the Bose-Einstein condensate, BEC, of photons, becomes the only macroscopically excited mode between two partially reflecting curved chiral mirrors of identical radius bordering said cavity inserting of the chiral molecules into the intra-cavity liquid, influencing the Bose-Einstein condensate, BEC, of photons with the chiral molecules,
   measuring polarization of light emerging from the cavity and
   determining the enantiomeric excess of chiral molecules based on the measured polarization.

2. Method according to claim 1,
   wherein by inserting the chiral molecules into the intra-cavity liquid the polarization of the Bose-Einstein condensate BEC, of photons will change from an unpolarised state to a circularly polarised state governed by the chirality of the molecules, which is determined by a polarimeter measuring the light emerged out of the cavity.

3. Method according to claim 1,
   wherein directing the laser light into the cavity is in form of unpolarised light

4. Device for detection of an enantiomeric excess of chiral molecules in liquid phase comprising, a laser source emitting laser light, a liquid-fillable cavity having two opposite sides consisting of partially reflecting curved chiral mirrors of identical radius for receiving an intra-cavity liquid comprising dye molecules, and a polarimeter, wherein the laser light is directed to enter the liquid-fillable cavity through one of the mirrors, the mirrors are designed and arranged to form left- and right-circularly polarized standing waves inside the cavity being excited by the laser light interacting with the dye molecules in the intra-cavity liquid, and the polarimeter is arranged outside the cavity to receive light emerging from the cavity through the other mirror.

**Patentansprüche**

1. Verfahren zur Messung eines Enantiomerüberschusses chiraler Moleküle in flüssiger Phase, umfassend:

   Lenken von Laserlicht in eine Kavität, die mit Farbstoffmolekülen gefüllt ist, die in Flüssigkeit aufgelöst sind, sogenannte Intrakavitätsflüssigkeit, sodass sich ein Bose-Einstein-Kondensat, BEC, von Photonen im Inneren der Kavität bildet, durch Anpassen einer Intensität des Laserlichts, das in die Kavität gelenkt wird, die mit der Flüssigkeit mit Farbstoffmolekülen gefüllt ist, auf bestimmte Absorptions- und Emissionseigenschaften der Farbstoffmoleküle, sodass die energieärmste Stehwelle, die das Bose-Einstein-Kondensat, BEC, von Photonen darstellt, die einzige makroskopisch erregte Mode zwischen zwei teilweise reflektierenden gekrümmten chiralen Spiegeln identischen Radius wird, die die Kavität begrenzen,
   Einführen der chiralen Moleküle in die Intrakavitätsflüssigkeit,
   Beeinflussen des Bose-Einstein-Kondensats, BEC, von Photonen mit den chiralen Molekülen,
   Messen von Polarisation von Licht, das aus der Kavität austritt, und
   Bestimmen des Enantiomerüberschusses chiraler Moleküle basierend auf der gemessenen Polarisation.

2. Verfahren nach Anspruch 1,
   wobei durch Einführen der chiralen Moleküle in die Intrakavitätsflüssigkeit die Polarisation des Bose-Einstein-Kondensats, BEC, von Photonen von einem unpolarisierten Zustand zu einem zirkular polarisierten Zustand wechselt, der durch die Chiralität der Moleküle geregelt wird, was durch ein Polarimeter bestimmt wird, das das Licht misst, das aus der Kavität austritt.

3. Verfahren nach Anspruch 1, wobei Lenken des Laserlichts in die Kavität in Form von unpolarisiertem Licht erfolgt.

4. Vorrichtung zur Messung eines Enantiomerüberschusses chiraler Moleküle in flüssiger Phase, umfassend eine Laserquelle, die Laserlicht emittiert, eine mit Flüssigkeit befüllbare Kavität mit zwei gegenüberliegenden Seiten, die aus teilweise reflektierenden, gekrümmten chiralen Spiegeln identischen Radius bestehen, zum Aufnehmen einer Intrakavitätsflüssigkeit, die Farbstoffmoleküle umfasst, und ein Polarimeter, wobei das Laserlicht durch einen der Spiegel gelenkt wird, in die mit Flüssigkeit füllbare Kavität einzutreten, wobei die Spiegel gestaltet und angeordnet sind, links- und rechtsdrehende zirkular polarisierte Stehwellen im Inneren der Kavität zu bilden, angeregt durch das Laserlicht, das mit den Farbstoffmolekülen in der Intrakavitätsflüssigkeit interagiert, und das Polarimeter außerhalb der Kavität zum Aufnehmen von Licht, das aus der Kavität austritt, durch den anderen Spiegel angeordnet ist.

**Revendications**

1. Procédé de détection d'un excès énantiomérique de molécules chirales en phase liquide comprenant :

   la direction de lumière laser dans une cavité remplie avec des molécules de colorant dissoutes dans le liquide, ainsi dénommé liquide intra-cavité, tel qu'un condensat de Bose-Einstein, BEC, de formes de photons à l'intérieur de la cavité, par adaptation de l'intensité de la lumière laser qui est dirigée dans la cavité remplie avec le liquide avec des molécules de colorant à des propriétés d'absorption et d'émission particulières des molécules de colorant de telle manière que l'onde correspondant à la plus faible énergie, représentant le condensat de Bose-Einstein, BEC, de photons, devient le seul mode excité macroscopiquement entre deux miroirs chiraux partiellement réfléchissants de rayon identique bordant ladite cavité,
   l'insertion des molécules chirales dans le liquide intra-cavité,
   l'influence du condensat de Bose-Einstein, BEC, de photons avec les molécule chirales,
   la mesure de la polarisation de la lumière émergeant de la cavité et
   la détermination de l'excès énantiomérique de molécules chirales sur la base de la polarisation mesurée.

2. Procédé selon la revendication 1,
   dans lequel en insérant les molécules chirales dans le liquide intra-cavité la polarisation du condensat de Bose-Einstein, BEC, de photons va changer d'un état non polarisé à un état circulairement polarisé gouverné par la chiralité des molécules, qui est déterminée par un polarimètre mesurant la lumière émergée hors de la cavité.

3. Procédé selon la revendication 1, dans lequel la direction de la lumière laser dans la cavité est sous forme de lumière non polarisée.

4. Dispositif pour la détection d'un excès énantiomérique de molécules chirales en phase liquide comprenant, une source de laser émettant une lumière laser, une cavité remplissable par un liquide ayant deux côtés opposés constituée de miroirs chiraux incurvés partiellement réfléchissants de rayon identique pour recevoir un liquide intra-cavité comprenant des molécules de colorant et un polarimètre, la lumière laser étant dirigée pour entrer dans la cavité remplissable par un liquide par un des miroirs, les miroirs sont conçus et disposés pour former des ondes correspondant à des ondes polarisées circulairement de manière gauche et droite dans la cavité qui est excitée par la lumière laser interagissant avec les molécules de colorant dans le liquide intra-cavité et le polarimètre est disposé à l'extérieur de la cavité pour recevoir la lumière émergeant de la cavité par l'autre miroir.

**Fig. 1**

**Fig. 2 a)**

| Component | Section | Comments |
|---|---|---|
| Laser | (a) | Wavelength 532nm |
| Cavity mirrors | (b) | Custom-made, > 99% reflectivity, diameter 1 mm, radius of curvature 1m |
| Positioning mechanism | (b) | Piezoelectric system |
| Dye solution | (b) | 1.5 mMol rhodamine 6G in methanol |
| Readout optics | (c) | Collection of polarisers and mirrors |
| CMOS | (c) | e.g. Leica DFC9000 or Andor Zyla |

**Fig. 2 b)**

Fig. 3

| Dye and solvent parameters | | Cavity parameters | |
|---|---|---|---|
| $\delta$ | 50 THz | $R$ | 1 m |
| $\gamma_\downarrow$, $g_v$ | 1 GHz | $L_0$ | 1.46 $\mu$m |
| $\gamma_{\downarrow v}^0$, $\gamma_{\uparrow v}^0$ | 10 Hz | $M$ | $10^9$ |
| $\Delta\Omega$ | 4.18 THz | $\kappa$ | 100 MHz |
| $\Omega_0$ | 3 456 THz | | $(|r_\sigma| = 0.99)$ |
| $n$ | 1.34 | $j$ | 7 |

Fig. 4

**Fig. 5**

Fig. 6

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150323445 A1

**Non-patent literature cited in the description**

- **M. H. M. JANSSEN ; I. POWIS.** Detecting chirality in molecules by imaging photoelectron circular dichroism. *Phys. Chem. Chem. Phys.,* 2014, vol. 16, 856-871
- **D. PATTERSON ; M. SCHNELL.** New studies on molecular chirality in the gas phase: enantiomer differentiation and determination of enantiomeric excess. *Phys. Chem. Chem. Phys.,* 2014, vol. 16, 11114
- **J. L. BADA.** Amino acid racemization dating of fossil bones. *Annu. Rev. Earth Planet. Sci.,* 1985, vol. 13, 241-268
- **D. PATTERSON ; M. SCHNELL ; J. M. DOYLE.** Enantiomer-specific detection of chiral molecules via microwave spectroscopy. *Nature,* 2013, vol. 497, 475-477
- **D. PATTERSON ; J. M. DOYLE.** Sensitive chiral analysis via microwave three-wave mixing. *Phys. Rev. Lett.,* 2013, vol. 111, 023008
- **A. EINSTEIN.** *Zur Quantentheorie des idealen Gases, Sitzungsberichte der Preußischen Akad. Der Wissenschaften,* 1924, vol. 261
- **M. H. ANDERSON et al.** Observation of Bose-Einstein Condensation in a Dilute Atomic Vapor. *Science,* 1995, vol. 269, 198-201
- **J. KLAERS et al.** Bose-Einstein condensation of photons in an optical microcavity. *Nature,* 2010, vol. 468, 545-548
- **P. KIRTON ; J. KEELING.** Thermalization and breakdown of thermalization in photon condensates. *Phys. Rev. A,* 2015, vol. 91, 033826